# EUROPEAN PATENT SPECIFICATION

(11) **EP 3 357 276 B1**
(45) Date of publication and mention of the grant of the patent: **24.06.2020**
(21) Application number: 15775177.7
(22) Date of filing: 01.10.2015
(51) Int. Cl.: H04W 28/26, H04W 84/00, H04W 88/08

(54) **CONTROLLING OPERATION OF A RADIO NETWORK SERVING A TRANSPORT SYSTEM**
STEUERUNG DES BETRIEBS EINES FUNKNETZWERKS FÜR EIN TRANSPORTSYSTEM
COMMANDE DU FONCTIONNEMENT D'UN RÉSEAU RADIO DESSERVANT UN SYSTÈME DE TRANSPORT

(43) Date of publication of application: 08.08.2018
(73) Proprietor: Telefonaktiebolaget LM Ericsson (PUBL), 164 83 Stockholm (SE)
(72) Inventor: BOTTARI, Giulio, I-56100 Pisa (IT); PONZINI, Filippo, I-56100 Pisa (IT); IOVANNA, Paola, I-56100 Pisa (IT)
(74) Representative: Zacco Sweden AB
(86) International application number: PCT/EP2015/072743
(87) International publication number: WO 2017/054880

(56) References cited:
- US-A1- 2014 274 064
- YISHENG ZHAO ET AL: "Spring model-based call admission control mechanism for high-speed railway environment", COMMUNICATIONS AND NETWORKING IN CHINA (CHINACOM), 2011 6TH INTERNATIONAL ICST CONFERENCE ON, IEEE, 17 August 2011 (2011-08-17), pages 1196-1200, XP032120091, DOI: 10.1109/CHINACOM.2011.6158339 ISBN: 978-1-4577-0100-9
- YU-TING HSUEH ET AL: "A novel wireless over fiber access architecture employing moving chain cells and RoF technique for broadband wireless applications on the train environment", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946702, ISBN: 978-1-4577-0213-6
- HABERLAND BERND ET AL: "Radio base stations in the cloud", BELL LABS TECHNICAL JOURNAL, WILEY, CA, US, vol. 18, no. 1, 1 June 2013 (2013-06-01), pages 129-152, XP011569643, ISSN: 1089-7089, DOI: 10.1002/BLTJ.21596 [retrieved on 2014-03-15]

## Description

### TECHNICAL FIELD

The present disclosure is generally related to a method and apparatus for use in controlling operation of a radio network.

### BACKGROUND

Passengers on board high-speed trains may travel for business, using "virtualoffice" connected applications, or for leisure, watching movies, browsing over internet, chatting or playing on-line games.

Wireless service can be provided to passengers via a Wireless Local Access Network (e.g. Wi-Fi®) access points on the train. The access points are connected to a radio network serving the train.

With the speed of trains potentially approaching 500km/h, there are challenges to providing a reliable, continuous, on-board wireless service to a large number of passengers rapidly moving through a radio network. A discontinuity in on-board wireless service may be caused by capacity issues, or by connection issues between the high-speed train and the radio network which provides service to the train.

US 2014/274064 describes the use of mobile relay nodes to serve users on high speed trains. In particular, this invention defines a framework that enables a base station of a cellular network to make accurate predictions of future traffic load, and take appropriate steps to serve this traffic, such as reserving sufficient air interface, backhaul and processing resources.

YISHENG ZHAO ET AL: "Spring model-based call admission control mechanism for high-speed railway environment", COMMUNICATIONS AND NETWORKING IN CHINA (CHINACOM), 2011 6TH INTERNATIONAL ICST CONFERENCE ON, IEEE, 17 August 2011 (2011-08-17), pages 1196-1200 describes call admission control in a mobility environment is a challenging issue. For high-speed railway environment, call admission control mechanism needs to be designed in order to admit more users when system bandwidth resources become scarce.

### SUMMARY

The invention is defined by the independent claims. Embodiments of the invention are defined by the dependent claims. An aspect of the disclosure provides a radio network comprises a plurality of service areas. A method of controlling operation of a radio network comprises receiving a first input relating to a transport system, the transport system providing for at least one vehicle. The radio network comprises a plurality of service areas. The first input is indicative of a position of the vehicle in the transport system. The method further comprises determining, on the basis of the first input and data which is indicative of the plurality of service areas, which of the service areas will next serve one or more radio terminals associated with the vehicle. The method further comprises outputting a control signal for use in controlling operation of the radio network (10) based on the determination of which of the service areas will next serve the one or more radio terminals associated with the vehicle.

An advantage of at least one example is an enhanced service quality to the one or more radio terminals associated with the vehicle.

A further aspect of the disclosure provides an apparatus for controlling operation of a radio network, the radio network comprising a plurality of service areas. The apparatus comprises an input configured to receive a first input relating to a transport system, the transport system comprising at least one vehicle. The first input is indicative of a position of the vehicle in the transport system. The apparatus further comprises a computation module configured to determine, on the basis of the first input and data which is indicative of the plurality of service areas, which of the service areas will next serve one or more radio terminals associated with the vehicle. The apparatus further comprises an output configured to output a control signal arranged to control operation of the radio network based on the determination of which of the service areas will next serve the one or more radio terminals associated with the vehicle.

A further aspect of the disclosure provides an apparatus for controlling operation of a radio network, the radio network comprising a plurality of service areas. The apparatus comprising an input configured to receive a control signal relating to a transport system comprising at least one vehicle, wherein the control signal is indicative of a service area which will next serve one or more radio terminals associated with the vehicle. The apparatus comprising a computation module configured to determine a configuration of resources of the radio network, based on the received control signal. The apparatus comprising an output configured to output a configuration signal arranged to configure the resources radio network based on the determination of which of the service areas will next serve the one or more radio terminals associated with the vehicle.

A further aspect of the disclosure provides an apparatus for controlling operation of a radio network, the radio network comprising a plurality of service areas. The apparatus comprising a processor and a memory, the memory containing instructions that when executed by the processor cause the processor to receive a first input relating to a transport system comprising at least one vehicle, wherein the first input is indicative of a position of the vehicle in the transport system. The processor is further caused to determine, on the basis of the first input and data which is indicative of the plurality of service areas, which of the service areas will next be needed to serve one or more radio terminals associated with the vehicle; and output a configuration signal to configure the radio network based on the determination of which of the service areas will next serve the one or more radio terminals associated with the vehicle.

A further aspect of the disclosure provides an apparatus for use with a radio network, the radio network comprising a plurality of service areas. The apparatus comprising a processor and a memory, the memory containing instructions that when executed by the processor cause the processor to receive a first input relating to a transport system comprising at least one vehicle, wherein the first input is indicative of a position of the vehicle in the transport system. The processor is further caused to determine, on the basis of the first input and data which is indicative of the plurality of service areas, which of the service areas will next be needed to serve one or more radio terminals associated with the vehicle; and output a control signal to a controller of the radio network based on the determination of which of the service areas will next serve the one or more radio terminals associated with the vehicle.

A further aspect of the disclosure provides a computer program product comprising a machine-readable medium carrying instructions which, when executed by a processor, cause the processor to perform the method of any example.

The apparatus may be configured to perform any of the described or claimed methods.

### BRIEF DESCRIPTION OF THE DRAWINGS

Embodiments of the invention will be described, by way of example only, with reference to the accompanying drawings in which:
Figures 1A and 1B show two examples of providing a wireless service on board a train;
Figure 2 shows a radio network and a transport system;
Figure 3 shows a train moving through a radio network;
Figures 4A and 4B show two examples of apparatus associated with a radio network and a transport system;
Figure 5 shows a radio network with fronthaul areas;
Figure 6 shows a radio network with base stations serving cell sites;
Figure 7 shows another example of a train moving through a radio network;
Figure 8 shows an example method of controlling operation of a radio network;
Figure 9 shows apparatus for a computer-based implementation.

### DETAILED DESCRIPTION

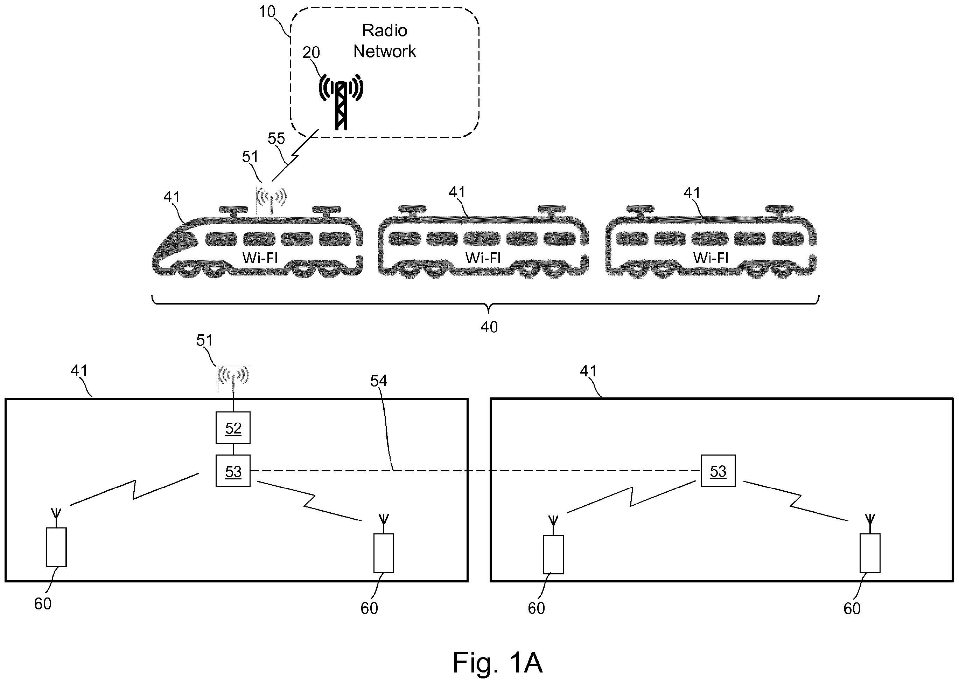

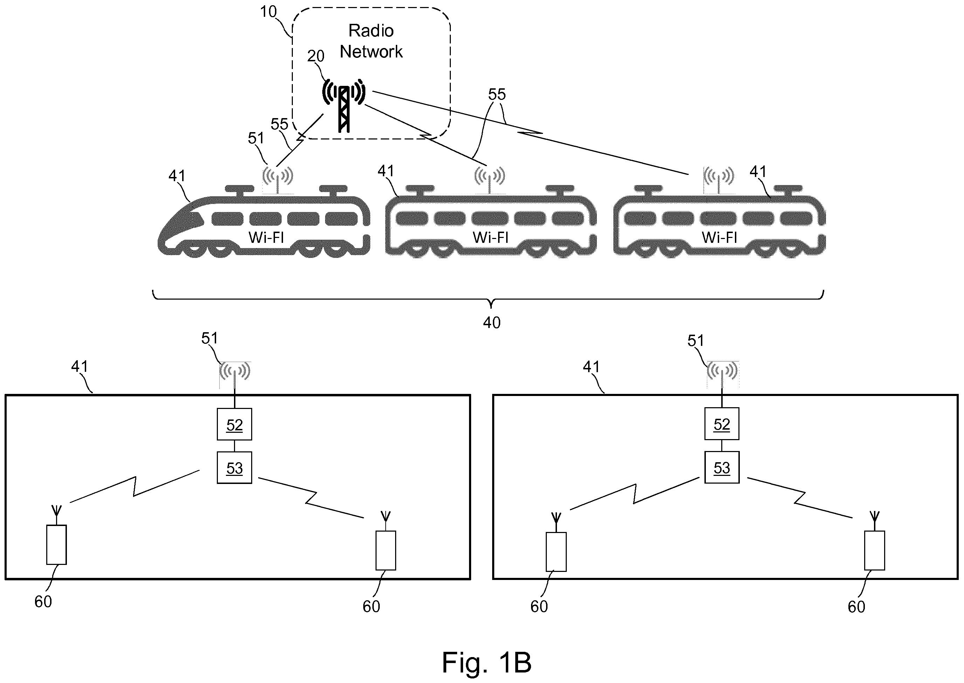

A transport system in the form of a rail transport system providing trains will be described as an example of a transport system in this disclosure. Figures 1A and 1B show two options for providing wireless service on-board a passenger-carrying train 40. The train 40 generally comprises a plurality of carriages, or cars, 41. A radio network 10, such as a cellular network, comprises base stations or radio units 20. The radio network 10 can be a general purpose radio network which serves the transport network as well as other radio subscribers. Alternatively, the radio network can be dedicated to serving radio equipment associated with the transport network.

The transport system may, for example, be any form of land transport system. For example, the transport system is a rail transport system. The rail transport system may provide trains of any type, for example, inter-city train services, local services, light rail, metro, tram or a rapid transit system. The transport system may provide a related rail transport system such as a Maglev train. In some examples, the transport system may provide a vehicle providing passenger carrying service, in particular, a scheduled service. For example, the transport system may provide road vehicles, e.g. buses or coaches. The transport system is also applicable to vessels travelling on water (e.g. boats, ships, ferries) or air (e.g. aircraft). A train is used in the description by way of example only; the disclosure is applicable to any vehicle, for example, provided by the transport systems described.

The radio network 10 can be a 3G, 4G or 5G Radio Access Technology (RAT), such as one or more of Long Term Evolution (LTE), LTE-Advanced, LTE-Evolution, LTE-NX, Wideband Code Division Multiple Access (WCDMA), Global System for Mobile Communication (GSM)/Enhanced Data Rates for GSM Evolution (EDGE), Worldwide Interoperability for Microwave Access (WiMax®), or Ultra Mobile Broadband (UMB™). The radio network 10 may be considered as a cellular network.

Figures 1A and 1B show one of the base stations 20 of the radio network 10; the radio network 10 comprises additional base stations 20 which are not shown for clarity.

In Figure 1A, the train 40 has radio equipment comprising a radio terminal 52 and an antenna 51. In use, a radio connection 55 is provided between the base station 20 and the radio equipment 51, 52. The radio connection 55 can comprise a radio downlink (network to train) and a radio uplink (train to network). The radio equipment on board the train 40 further comprises one or more wireless access points 53. The wireless access points 53 form a WLAN, to provide wireless access to wireless user equipments (UEs) 60 on board the train 40. The UEs 60 can be mobile phones, computers, laptops, tablets, media players, gaming devices, or any other kind of wireless device.

A suitable number of the wireless access points 53 may be provided on-board the train to achieve a desired quality of service. The wireless access points 53 may be provided at a density of one wireless access point 53 per carriage 41 as shown, multiple wireless access points 53 per carriage 41, or any other density. The wireless access points 53 can be Wi-Fi®access points (i.e. based on IEEE 802.11) or any other suitable technology. Alternatively, the wireless access points 53 can use other unlicensed wireless resources, such as unlicensed Long Term Evolution (LTE) carriers, known as L TE-U. In the example shown, the vehicle (i.e. train 41) has a single radio terminal 52 providing a radio connection with the network 10. The single radio terminal 52 is configured to serve a plurality of UEs 60 associated with (i.e. within) the train. The radio terminal 52 may be considered as a router or switch, providing data and/or voice communication between the UEs and the network. The radio terminal 52 may be configured to communicate with the network using a first RAT (e.g. L TE), and with the UEs using a second, different RAT (e.g. Wi-Fi®). Thus, the single connection of the radio terminal 52 requires a high capacity in communication with the network, in order to serve a plurality of UEs. An internal connection 54 within the train 40 connects one or more remote wireless access points 53 to the radio terminal 52.

Figure 1B shows an alternative arrangement. Figure 1B is similar to Figure 1A, and the same references have the same function as described above. In this example, the train comprises a plurality of radio terminals 52 connected to the radio network 10, For example, each carriage 41 of the train 40 has radio equipment comprising a radio terminal 52 and an antenna 51. In use, a radio connection 55 is provided the base station 20 and each of the radio equipments 51, 52. Each of the radio terminals 52 can connect to one or more wireless access points 53, e.g. within a respective carriage 41. As described, the wireless access points 53 provide wireless access to UEs 60 on board the train 40.

In Figure 1A, the radio terminal 52 is associated with a Subscriber Identifier, or a plurality of Subscriber Identifiers, which identify the radio terminal 52 within the radio network which provides service to the train 40. Similarly, in Figure 1B each of the radio terminals 52 is associated with a Subscriber Identifier, or a plurality of Subscriber Identifiers, which identify the radio terminal 52 within the radio network which provides service to the train 40.

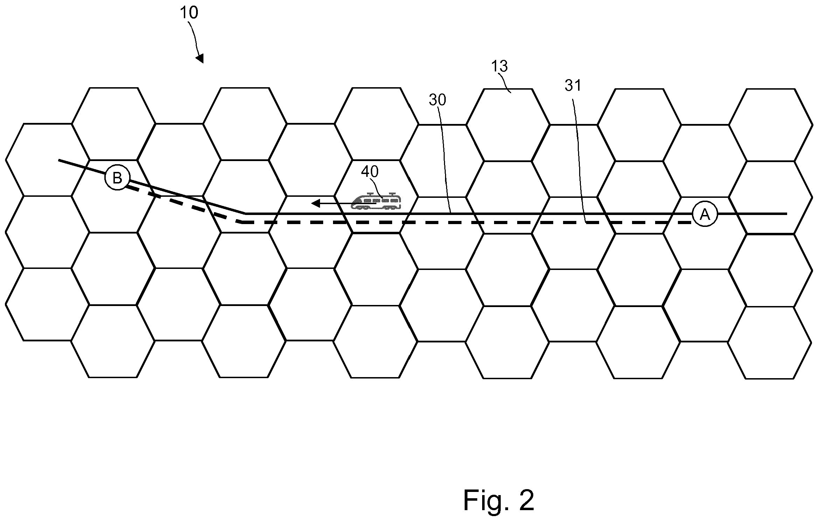

Figure 2 shows an example implementation of a radio network 10. The radio network 10 comprises a plurality of cells. For clarity, the cells are shown as a set of regularly shaped areas of equal size. In practice, it will be understood that the cells can have different shapes and/or different sizes. Figure 2 also shows a transport system 30 comprising rail track (i.e. permanent way) overlaid upon the indication of the cells of the radio network 10. Each cell may be considered as provided by a base station. A base station may provide one or more cells. Each cell may be provided by a radio unit and/or antenna associated with a base station. The radio unit and/or antenna may be integrated with, or remote from, a baseband processing unit configured to provide baseband processing for the radio network 10. For example, the radio unit providing the cell may be termed a Remote Radio Unit (RRU) if remote from the baseband processing units, which may be termed a Digital Unit (DU) or BaseBand Unit (BBU). The cell may be considered as provided from a cell site, for example, at which at least the antenna is located.

A vehicle (e.g. train) within the transport system 30 can generally follow one of various paths through the transport system 30. For example, a train 40 may follow a schedule where it begins a journey over a path 31 of the transport system 30 at a start point A of the transport system 30 at a particular date and time and ends the journey at a destination point B of the transport system 30 at a particular date and time. The train 40 may optionally stop at intermediate points along the journey. The speed of the train may be non-linear during the journey. For example, the train 40 will accelerate as it leaves a station and will decelerate as it approaches a station at which it is scheduled to stop. The train 40 may have one or more segments of the journey during which it travels at high-speed without stopping at stations and another segment, or segments, during which it travels at lower speed.

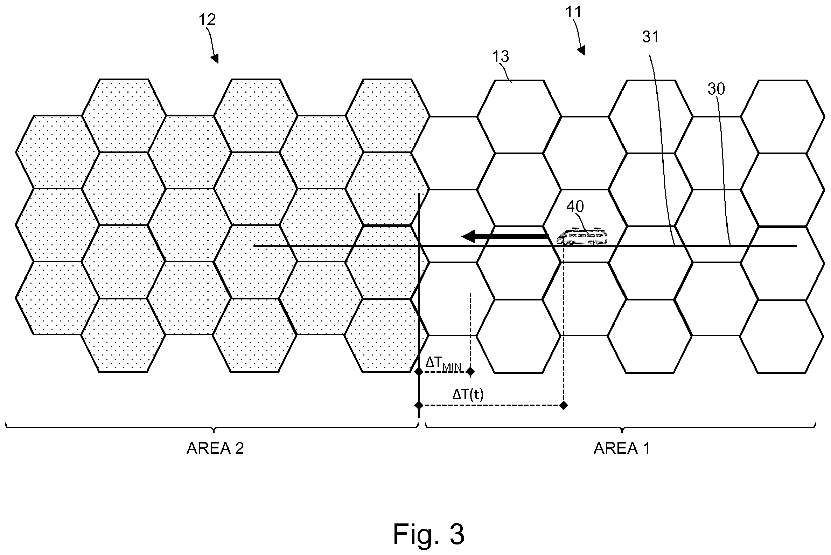

Figure 3 shows a radio network 10 and an example path of a train 40 in a transport system 30. The radio network 10 comprises a plurality of service areas 11, 12. In this example, a radio service area comprises a set of one or more cells 13. As the train 40 moves along its path 31 along the transport system 30 (e.g. rail track), it passes through different radio service areas 11, 12. The path 31 is shown as a straight line, but it will be understood the path 31 may be curved and/or change in altitude.

Knowledge of when the train will arrive or leave a radio service area, and which radio service area will be needed in the future, can allow the radio network 10 to prepare resources in advance in a subsequent (e.g. the next) radio service area 12 along the path of the train 40. Aspects of the disclosure provide for identification of the next radio service area which the train will enter (e.g. based on the identified path), and when the train will enter (e.g. based on a location and/or speed of the train relative to the radio service area).

For example, a quantity ΔT(t) defines a time until a train will cross the boundary between radio services areas 11, 12. A threshold value ΔT_{MIN} defines a threshold time. During use, the quantity ΔT(t) is compared with ΔT_{MIN} When ΔT(t) ≤ ΔT_{MIN,} action can be taken. For example, action can be taken to send a control signal, in order to provide a notification of the next service area 12 along the path 31 of the train 40. Alternatively, the control signal is based on a distance to the next service area being within a threshold.

In some examples, the identification of the next service area for the vehicle data connection(s) allows a pre-configuration of the radio network, in advance of the actual demand to be served. For example, additional capacity may be preconfigured by switching on additional elements, e.g. cells, small cells or radio units and/or reserve resources, e.g. baseband processing resources in a DU. Transport resources, for example for fronthaul and/or backhaul may be set-up or allocated to meet the predicted demand. In some aspects, context information can be provided, e.g. subscriber information. In the event that the resources for the predicted demand are not sufficient, the pre-configuration of the radio network may comprise prioritizing certain communication types or users, limiting usage, off-loading traffic or processing to different resources. In some examples, the radio layer is configured to be changed, e.g. by modifying a code and/or modulation scheme.

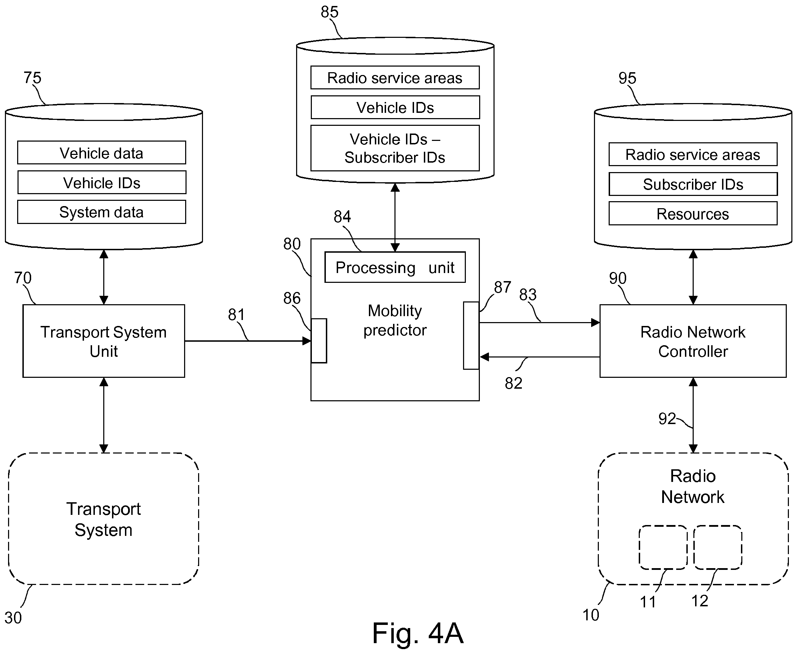

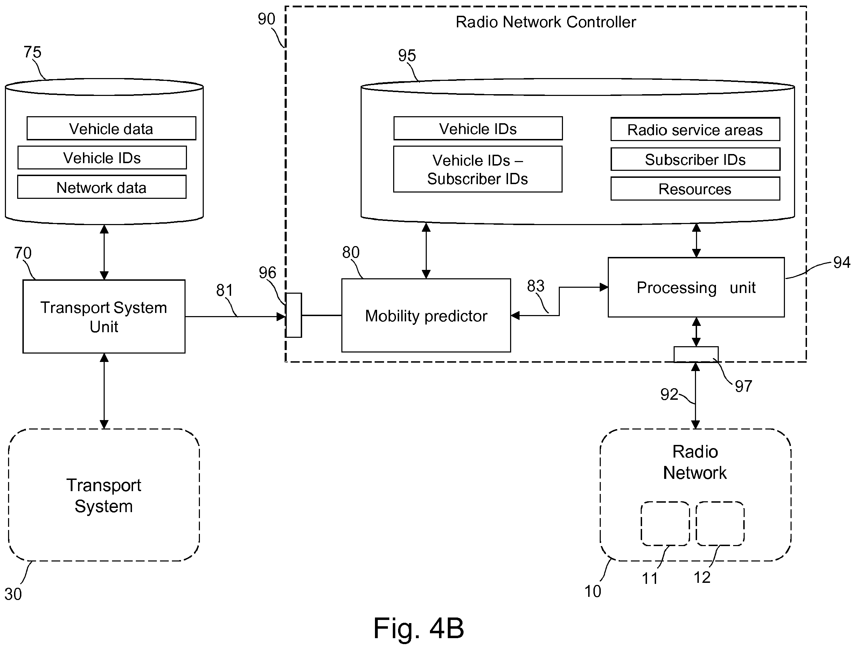

Figures 4A and 4B show examples of apparatus for a radio network and a transport system 30. The radio network 10 comprises base stations in radio service areas 11, 12. Although only two radio service areas are indicated in the drawings, it will be understood that an actual radio network 10 can comprise a larger number of radio service areas. A radio network controller 90 controls the radio network 10 using configuration signals 92. The radio network controller 90 controls or configures resources in the radio network 10. The configuration signals 92 are output from the radio network controller 90 in order implement a configuration based on the received advance indication of the next service area for the vehicle. The radio network controller 90 can supervise and coordinate various activities of the plurality of network nodes in a radio network. In particular, the controlling and configuring comprises determining and allocating processing and radio resources, for example as described above. Storage 95 is associated with the radio controller 90. Storage 95 stores data used by the radio network controller 90. For example, the storage 95 is a memory, e.g. a computer memory using any suitable technology. Storage 95 may store, for example, Subscriber Identifiers, data about radio service areas, data about resources in the radio network. The radio network controller 90 may also control the radio network as is conventionally known.

A transport system 30 comprises transport resources, such as infrastructure (e.g. track). In some examples, the transport system may be considered as including the vehicles (e.g. trains) which can travel along the infrastructure. In a further example, the transport system may be considered as the infrastructure without the vehicles, or as a control (e.g. signaling) system for infrastructure or vehicles, but not including all infrastructure or vehicles.

A transport system unit 70 can comprise a unit or module which controls, or monitors, operation of vehicles in the transport system. For an example of a rail network, the transport system unit 70 can store information about status of the trains on the rail network, such as the position of trains and, optionally, speed of the trains. In a rail network, the transport system unit 70 is configured to obtain accurate information about position (and optionally speed) of trains, for example, from a signalling system of the rail network. The transport system unit 70 may be a monitoring unit which monitors or determines status of vehicles in the transport system, such as one or more of position, speed, schedule or route. The transport system unit 70 may belong to an operator of vehicles, such as an operator of a fleet of trains, or an operator of the infrastructure. The infrastructure, e.g. network of railway tracks and signalling which are used by the trains, may be under the control of a different entity to the vehicle, e.g. train, operator. In some examples, the transport system unit 70 can communicate with the operator of the rail network to obtain information which may affect the schedule of that operator's trains, such as delays due to problems, blocked railway tracks etc. Storage 75 is associated with the transport system controller 70. Storage 75 may store, for example, identifiers of vehicles (trains), data about vehicles (position, speed, route) and data about the system 30. For example, the storage 75 is a memory, e.g. a computer memory using any suitable technology.

The transport system unit 70 is configured to output a signal 81 indicating the position of a vehicle, and optionally further information, e.g. speed or route of the vehicle. The signal 81 is output to a mobility predictor 80.

The mobility predictor 80 is a functional unit which generates control signals 83 for controlling operation of the radio network. The control signals 83 are transmitted to the radio network controller 90. In some examples, the control signals 83 indicate which of the service areas will next serve the one or more radio terminals associated with the vehicle. Thus, the signals 83 are used for controlling (i.e. configuring) the radio network, since the configuration and control by the radio network controller is based on the received signals 83. In some examples, the control signals 83 do not indicate the change in configuration which should be carried out. The radio network controller 90 is configured use the received information (i.e. next service area) in signal 83 of the determined next service area to determine a configuration of resources of the radio network associated with the next service area.

The mobility predictor 80 uses information from the transport system unit 70 and/or radio network controller 90. Storage 85 is associated with the mobility predictor. Storage 85 may store data used by the mobility predictor 80. For example, the storage 85 is a memory, e.g. a computer memory using any suitable technology.

The mobility predictor 80 may receive one or more of the following inputs from the transport system unit 70 in the signal 81:
- Data about the transport system topology (e.g. data about the mesh of railway tracks);
- Data about vehicles in the transport system. For example, the data may indicate vehicle identification, scheduled route, position and/or speed. For a train, the data may be:
   - an identifier of the train (Train ID);
   - data about the route of the train, e.g. end to end path, including positions of intermediate stops and scheduled timetable;
   - data about the real-time position of the train (e.g. known by the rail network via a signalling system);
   - data about the real-time speed of the train.

In some examples, the mobility predictor 80 may receive one or more inputs in a signal 82 from the radio network controller 90. The signal 82 may provide data about the radio access network, e.g. areas served by cells and their associated radio service area. For example, the data may indicate a footprint of the radio service areas (e.g. cell areas/sites, fronthaul areas, e.g. area served by a common DU, topology information for connections between a RRU and DU, transport network capability). The data may optionally indicate a capacity of the radio access network, e.g. per cell or per radio service area. In some example, the data may indicate a current (e.g. real time) indication of available capacity in radio access network (or already allocated/used capacity). In some examples, the data comprises information on status of elements of the radio access network, e.g. whether a particular cell is switched off. In some aspects, the data may indicate a potential capacity or available flexibility if network elements are switched on (or off). In some examples, the signal 82 may further provide identifiers of one or more subscriber IDs associated with a vehicle (e.g. train).

The mobility predictor 80 may store a correspondence between a Train ID (which identifies the train within the transport system 30) and one or more Subscriber ID (which identifies the radio equipment on the train in the radio network 10). For example, the storage 85 includes a look-up table which stores the associated subscriber IDs. In further examples, the mobility predictor 80 identifies the next service area to be entered by the vehicle, and the association between the vehicle and radio terminals is identified by the radio network controller.

The mobility predictor 80 may output one or more outputs in a signal 83 to the radio network controller 90, for example providing data which is indicative of which of the radio service areas will next be needed to serve the radio equipment on the vehicle 40. In some examples, the signal 83 comprises data which is indicative of a time period before another of the radio service areas will be needed to serve the radio equipment on the vehicle 40. For example, the expected time may be explicitly including in the signal 83, or the radio network controller may be configured with the threshold ΔT_{MIN}, and so receipt of the signal 83 indicates to the radio network controller that the train is within the threshold time ΔT_{MIN} of being in the next service area. In some aspects, the mobility predictor 80 may output an indication of the amount of capacity which will be required by the radio terminal(s) associated with the vehicle.

In some examples, the mobility predictor 80 may output an advance indication in signal 83 of where traffic is to be expected, i.e. which radio service area. Optionally, the signals 83 provide an indication of the time that the traffic will arrive in the next service area and/or the quantity of that traffic. The radio network controller 90 is configured to use that information as an input to determine what configuration should be carried out in order to prepare the network for the expected traffic change. In a further example, the mobility predictor 80 also provides an indication of what changes should be made to the radio network, which can then be implemented by the radio network controller 90. In either example, the radio network controller 90 is able to configure the radio network 10 according to a future traffic demand for the moving vehicle, as predicted by the mobility predictor 80.

For example, the radio network (e.g. as controlled by the radio network controller 90 by signals 92 will pre-configure capacity in the radio service area which will next be needed to serve the one or more radio terminals associated with the vehicle. Thus, the signal 83 indicating the identity of the next service area, and/or the configuration signals 92 may be transmitted in advance (i.e. prior to or before) the vehicle enters the next radio service area. This allows the radio network to be configured before communication between the cells and vehicle is started.

The control signal is for use in pre-configuring resources of the radio network associated with the service area determined to be next to serve the one or more radio terminals associated with the vehicle. The control signal may be considered as used for pre-configuring the resources by triggering the radio network controller to configure the resources of the determined next service area. Alternatively, the control signal may be considered as a configuration signal which is sent to resources of the radio network, in order to configure those resources.

The radio network controller 90 is configured to determine a configuration of resources of the radio network, based on the received control signal 83 indicative of a service area which will next serve one or more radio terminals associated with the vehicle. The determined configuration in response to the control signal may, for example, be controlling the radio access network to increase capacity, e.g. by pre-configuring additional sectors or cells or, in general, switching on additional antenna elements or radio units to increase the capacity of the radio access network to serve the one or more radio terminals associated with the vehicle. Additional baseband processing unit resources can be reserved or switched on to process the additional radio access resources required by the additional sectors or antenna elements. Another possibility is to pre-configure a small cell layer associated with a macro cell layer. The small cell layer can provide additional capacity within the macro cell. For example, the small cell layer comprises one or more small cells (i.e. a small range, low power, cell), optionally in addition to a macro cell. Radio network 10 may vary the amount of resources, such as processing units DU, in operation to match traffic demand in order to save power. Knowledge of an increase in traffic demand, due to the passing of the train 40 through the service area of the radio network, can allow the radio network to bring additional resources on line in a timely manner.

Another possibility is to pre-configure (e.g. reserve) resources on communication links in the radio network. For example, communication links can connect baseband processing units to remotely located radio units (RRUs) at cell sites. Resources can be reserved on the communication links to ensure traffic can be carried between the baseband processing units and the radio units.

Another possibility is to pre-configure context information in the next radio service area 12 along the path of the train 40. Context information can comprise subscriber information, such as authentication information.

Any of these actions can assist in improving the quality of the radio service to UEs on the train 40, and/or can improve the quality of the radio service to any other radio users served by the radio system 10. Knowing that the train will arrive a determined time in the future allows a more timely preparation of the next radio service area. It is possible that the new radio service area may not have sufficient resources to accommodate all of the radio traffic due to the train. In that case, knowing in advance that the train will overload the wireless service area can allow the radio network to make arrangements to best serve the users. For example, the radio network can use measures such as: prioritizing users and/or one or more communication types to ensure users with highest priority are not affected; adapting coding and/or modulation to create more capacity; or off-loading users to neighbouring wireless service areas where possible.

In Figure 4A, the mobility predictor 80 is shown as a separate functional unit to the radio network controller 90. The mobility predictor 80 comprises an input/output interface 86 with the transport system unit 70 for receiving signals 81, an input/output interface 87 with the radio network controller 90 for transmitting signals 83, and a processing unit or computation module 84.

In Figure 4B, the mobility predictor 80 is provided as a functional unit which forms part of the radio network controller 90. The radio network controller 90 comprises an input/output interface 96 for receiving signals 81 from the transport system unit 70, an input/output interface 97 for signals 92 with the radio network 10 and a processing unit or computation module 94. This example may reduce storage requirements, as data in stores 85, 95 of Figure 4A can be shared by the radio network controller 90 and the mobility predictor 80. In this example, the radio network controller and mobility predictor 80 may be considered as integrated. The combined radio network controller 90 may be considered as carrying out the functions and method of both the mobility predictor 80 and radio network controller 90 described above

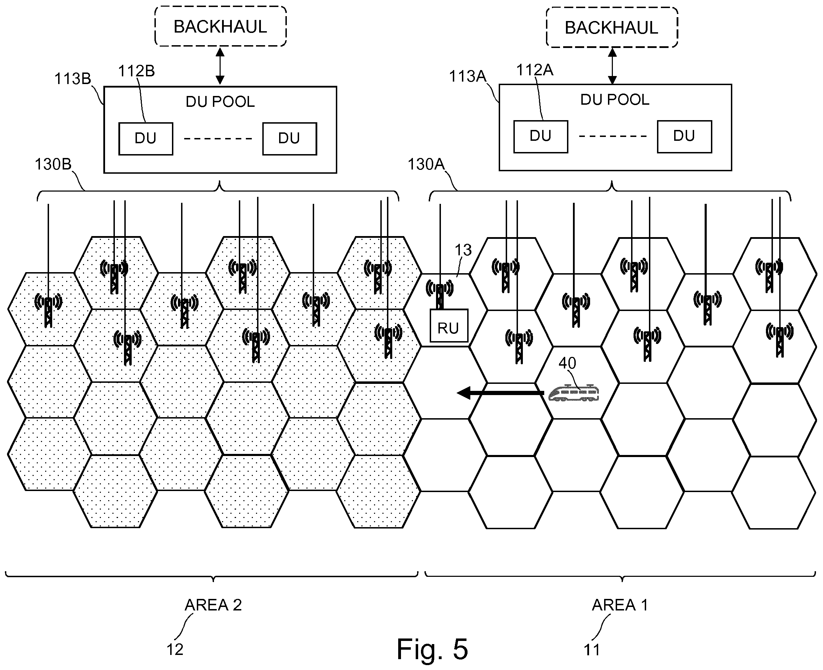

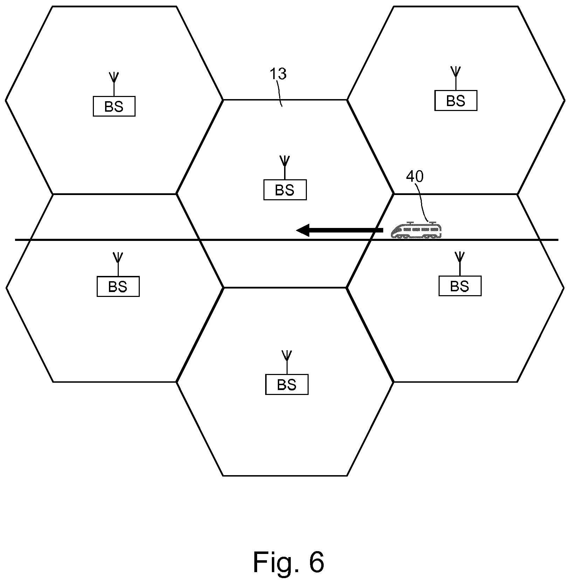

Figures 5 and 6 show two example types of radio network 10 which may provide service to radio equipment on the vehicle in a transport system 30. The radio network of Figure 5 is a radio network in which the functions of a conventional base station are divided between two or more nodes. One general term for this kind of network is a fronthaul network, in which RF functions in a RRU are separated in location from baseband processing in a DU.

Baseband processing of radio signals is performed by a digital unit (DU) 112. Digital units can be provided as a pool of resources, called a DU pool 113. The DU pool 113 may alternatively be called a DU cloud or a baseband hotel. Radio frequency processing is performed by a radio unit (RU), which may also be considered as a RRU. One RU is shown at a cell 13 in Figure 5. Other cell sites can also comprise an RU. Radio frequency signals are transmitted and received by an antenna. Signals are carried between the two nodes over an optical transmission link or network. Other types of communication link, such as non-optical links, can also be used to carry signals between the two nodes. Signals carried between the two nodes are called fronthaul signals.

The pooling of baseband processing resources has advantages such as optimised usage of radio resources due to coordination at the DU pool 113. Another advantage is load sharing and balancing across the DU pool 113, which can offer high availability and seamless recovery. Another advantage is that DU resources do not have to be dimensioned for peak requirements of each individual cell site but, instead, can be dimensioned for the aggregate requirement of the cell sites served by the DU pool, taking advantage of the distribution of the traffic over time and space.

Optionally, the radio terminal on the train 40 may connect to multiple cells 13 at the same time to increase capacity and/or reduce inter-cell interference. Optionally, the train 40 may use carrier aggregation to increase the bandwidth by using multiple radio carriers at the same time. Both these techniques can benefit from centralization of baseband processing resources in a common pool 113.

Another aspect may be an antenna being remote from the radio unit and/or digital unit. The radio signal is transmitted from the radio unit to a remote antenna to provide the cell, for example, using Radio over Fibre (RoF). This aspect has an advantage of consolidating much of the base station signal processing at one location, which can allow easier servicing and upgrading of the single location compared to visiting a large number of individual cell sites.

In some aspects, the use of a RRU and remote antenna may be referred to as digital RoF and analog RoF. In a digital Radio over Fibre system, the RU is located remotely from the DU and is typically called a RRU. The DU and RRU are connected by an optical link. The DU outputs digital values, such as in-phase and quadrature (IQ) values. Data is carried over the optical link in digital form to the RRU using a protocol such as the Common Public Radio Interface (CPRI) or packet based protocol for carrying such radio data. The RRU performs digital-to-analog conversion, and may perform RF functions such as up-conversion to RF or filtering.

In an analog Radio over Fibre system, the DU and RU are located at a first node. The antenna is located at, or connected to, the second node. An optical link connects the first node to the second node. In the downlink direction, the first node sends signals over the optical link in analog form at radio frequency (RF) or an intermediate frequency (IF). At the second node, the analog domain signals are received over the optical link, converted to electrical form, and either sent directly to an antenna for transmission, or repositioned in frequency and then transmitted. In the uplink direction radio signals are received at the antenna. The received signals may be used to modulate an optical transmitter or repositioned in frequency and then used to modulate an optical transmitter. At the first node, signals are converted to the electrical domain and then processed by the radio unit (RU) and digital unit (DU).

In a radio network using RoF, each radio service area 11, 12 can be considered as a fronthaul area. Thus, a radio service area may be defined as having a common baseband processing entity (e.g. DU, DU pool or baseband hotel). A first fronthaul area (AREA 1) 11 comprises a plurality of cell sites which are connected, via fronthaul links 130A, to a first DU pool 113A. The first DU pool 113A comprises a plurality of DU units 112A. A second fronthaul area (AREA 2) 12 comprises a plurality of cell sites which are connected, via fronthaul links 130B, to a second (different) DU pool 113B. The second DU pool 113B comprises a plurality of DU units 112B. As a train 40 moves through the transport network 30, the train is handed from one radio service area to the next radio service area. In the example of Figure 5, train 40 is first served by radio service area 11, and DU pool 113A. As the train 40 continues, it is then served by radio service area 12, and DU pool 113B. Within each radio service area 11, 12, the train may be handed over from one cell site to the next as it moves along the track. However, the train continues to be served by the same DU pool 113A until the train leaves the radio service area 11. Each fronthaul area may have a maximum diameter, for example, of a few tens of km. The fronthaul links may be considered as a communication network.

In some aspects, the vehicle movement prediction is used to preconfigure radio network resources in a next radio service area to handle radio communication with the vehicle. As such, one or a plurality of cells or base stations may be pre-configured together. In some examples, the one or a plurality of cells or base stations which are pre-configured together share a common baseband processing unit(s). Thus, the pre-configuration is for a next DU (or DU pool), and optionally associated radio access network elements, providing radio access network for a plurality of cells (RRUs). Thus, the next fronthaul area is able to effectively provide radio access service for the vehicle.

The pre-configuration is in response to information received from the transport system, which allows a prediction of the next radio service area. The prediction may also include the time at which the resources of the next radio service area, to allow radio network elements to be turned on in time (but not excessively early). In some examples, the amount of data traffic expected to be determined, for example, to pre-configure a sufficient amount of resources and/or carry out the actions to handle that amount of data traffic.

Figure 6 shows a further example radio network with conventional base stations. Each base station comprises baseband processing functionality and radio frequency processing functionality. Each base station connects to a backhaul network. The backhaul network may be considered as a communication network. In this case, each radio service area is a cell 13. As the train 40 moves through the transport network 30, the train 40 is handed from one cell to the next cell which is best situated to serve the train 40. Thus, the examples described may be applicable to pre-configuration of a radio access network comprising base stations having integrated baseband processing, as well as to fronthaul areas comprising a plurality of RRUs sharing a common baseband processing.

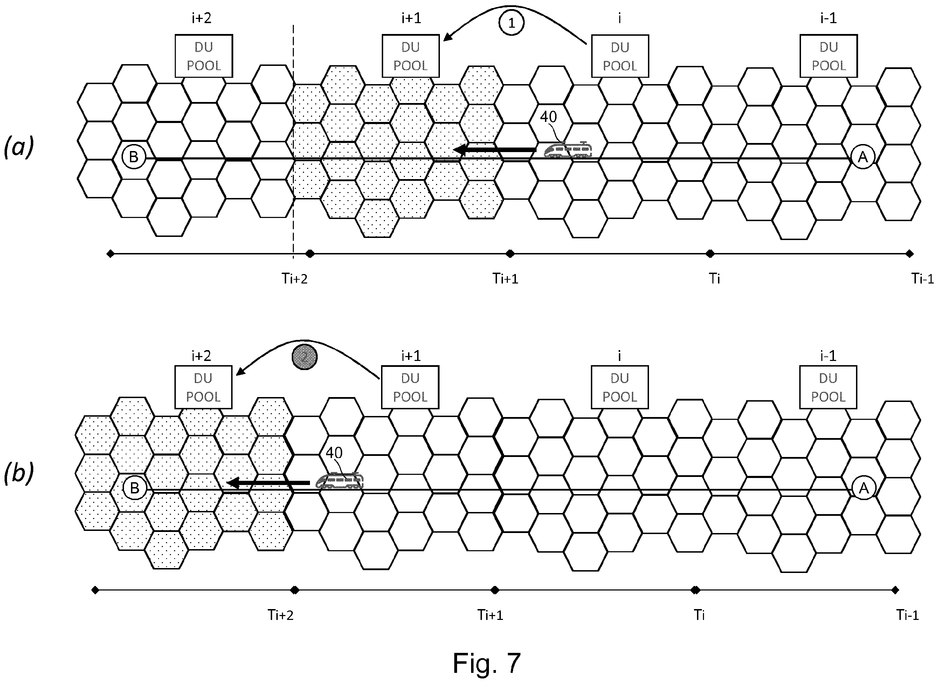

Figure 7 shows an example train route through a sequence of fronthaul areas. A train 40 proceeds from departure point A to destination point B on a planned route. From A to B, the train traverses a sequence of N fronthaul areas, from area 0 to area (N-1). Departure time is T₀ and arrival time is T_{N}. Duration of time intervals in each fronthaul area depends on factors such as train speed, size of the fronthaul areas, location of intermediate stations. Consider that Bᵢ(t) is the amount of baseband processing resources allocated in DU pool *i* at time *t* to process the radio traffic of the train in fronthaul area *i*. ΔT(t) is the "time to border" of the train. The mobility predictor unit 80 is configured to receive the information from the transport system unit 70 (and have received information on the radio network) needed to determine which is the next fronthaul area, and to calculate ΔT(t). The mobility predictor unit 80 is configured to continuously compare ΔT(t) with a threshold value ΔT_{MIN}. When ΔT(t) is less than the threshold value ΔT_{MIN}, the train is determined to be in the vicinity of the border with the subsequent fronthaul area *(i+1),* shown with shaded cells, and a notification is sent to the radio network controller 90.

When the radio network controller 90 receives the "near the border" notification that the vehicle is within a threshold time of moving into the next area, i.e. "near the border" notification, from the mobility predictor unit 80, the radio network controller 90 is configured to determine the amount of baseband processing resources expected to be required by the vehicle. For example, the radio network controller 90 may determine that the current value of Bᵢ(t) in fronthaul area *i* will be similarly demanded in DU pool of fronthaul area *(i+1)* when the train crosses the border into radio service area *(i+1).* This information allows the radio network controller 90 to configure, or pre-configure, the DU pool in the radio service area *(i+1).* Further configurations may also be commanded, as described above, in order to meet the radio requirements of the vehicle.

In Figure 7(a) the train approaches the border with area *(i+1)* and resources are configured in DU pool *(i+1).* In Figure 7(b) the train approaches the border with area (*i+2*) and resources are configured in DU pool *(i+2).* Thus, resources in an area are configured in advance of the vehicle entering the area, due to use of information indicating the vehicle's estimated time of entry into the next area.

As previously stated, the amount of traffic and processing resources required to any crossed wireless service area can be known with a good degree of accuracy. A wireless network controller 90 can pre-allocate the resources needed by the train 40. The method iterates from A (i.e. *i*=*0)* to B (i.e. *i*=*N-*1) and each iteration is triggered by the "near to the border" event of the train between two fronthaul areas. The method can be applied, simultaneously, to all of the trains operating on the rail network. The baseband resources allocated to a train in a fronthaul area may be reallocated to other trains, or for other purposes, and/or switched off, as the train moves to the next fronthaul area.

In this method, the border between two contiguous fronthaul areas can be statically defined even if the actual border will, in practice, be less clearly defined due to margins in radio coverage and overlap among cells at the borders. By defining a clear and fixed demarcation between fronthaul areas it is possible to determine how much time the train will take to arrive to the next border. When the "time to the border" ΔT(t) is less than the threshold value ΔT_{MIN} the train is assumed to be in the vicinity of the border with the subsequent fronthaul area *(i+1).*

In this method, the mobile traffic associated with a train may be processed by a single DU pool at a time, or by multiple DU pools. In this method, the train position can be known exactly to the rail network control system. In this method, for a specific train at a given time, the amount of mobile traffic (i.e. traffic density) and the associated baseband processing is known by the radio network controller 90 because the train has its own "Subscriber ID" in the radio network.

In this method, the entire sequence of DU pools that will be encountered by the train on its route may be known in advance. For example, if the route of a train is known, it is known which radio areas will be needed to serve the train. Alternatively, the method can operate on the basis that the entire sequence is not pre-defined, but only the next DU pool is known.

In this method, there may be a change in the number of passengers when a train stops at a station along the route. The method may assume a consistent number of passengers throughout the journey. Alternatively, the method may use information about passenger loads to adjust the estimated radio traffic load. Information about passenger loads may be based on actual passenger loads, or historical data about passenger loads for that route or time of day.

An example of the method may estimate radio traffic load based on certain assumptions. Example assumptions include:
▪ Passengers per train: 1000
▪ Activity factor: 50%
▪ User experienced data rate: 50 Mbps downlink, 25 Mbps uplink
▪ Traffic density: 25 Gbps/train DL, 12.5 Gbps/train UL
▪ Train speed: max 500 km/h

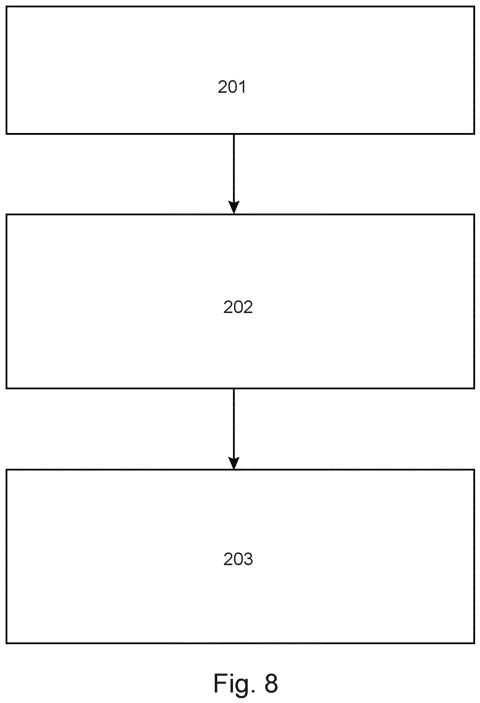

These assumptions may be modified or replaced by measured traffic loads. Figure 8 shows a method of controlling operation of a radio network 10 with a plurality of service areas 11, 12. Block 201 receives a first input from a transport system providing at least one vehicle. The first input is indicative of a position of the vehicle in the transport system. The first input received by the mobility predictor is used by the mobility predictor 80 to determine or calculate the position of the vehicle in the transport system. Block 202 determines, on the basis of the first input and data which is indicative of the plurality of service areas, which of the service areas will next be needed to serve one or more radio terminals associated with the vehicle. Block 203 outputs a control signal to control operation of the radio network based on the determination of which of the service areas will next serve the one or more radio terminals associated with the vehicle. In some examples, the control signal indicates a time at which communication with the next service area will be required.

In the examples described above, user equipments 60 on the vehicle are served by a wireless access point 53 on the vehicle. User equipments 60 only need to use a wireless local area network access technology, such as Wi-Fi®, to obtain service. The radio network 10 provides radio service to the radio terminals 52 on the vehicle 40 which, in turn, provide wireless access to user equipments 60 via the wireless local area network. As such, the radio network is only in communication with one or more wireless terminals which are solely associated with that vehicle. In another example, one or more of the users on the train 40 may use their own subscription to a cellular radio network operator to obtain service directly from the radio network 10. These users who obtain a direct radio connection to the radio network with a user equipment 60 will be called "sparse" cellular connections. In an example, these sparse cellular connections can be logically associated with the train (or other vehicle) and cumulated with the cellular connection to the one or more radio terminals 52 on the train as part of the overall traffic associated with the train.

There are several possible ways in which the sparse cellular connections can be logically associated with the train (or other vehicle). One possibility is to use a positioning system (e.g. GPS) on the user equipment to remotely track position of the equipment. This would allow a high accuracy in determining the user position but the tracking would require explicit user authorisation and reliability may be limited due to intermittent visibility of the sky/satellites inside the train. Another possibility is for the network to determine a same location for the UE and vehicle, e.g. by tracking the sequence of cells (or antennas) to which a user is connected to over a time interval. If this sequence is the same, with some tolerance, to the sequence of cells used by the cellular connection of the train then it is possible to determine that the user is on the train.

In some examples, the logical association between the sparse users and the cellular connection to the train may only be provided only for the sparse users subscribing to the same radio operator network as the radio network operator which serves the radio terminal on the train. In another example, where there is resource sharing among operators, it may be possible for the logical association to be extended to sparse users of other radio network operators.

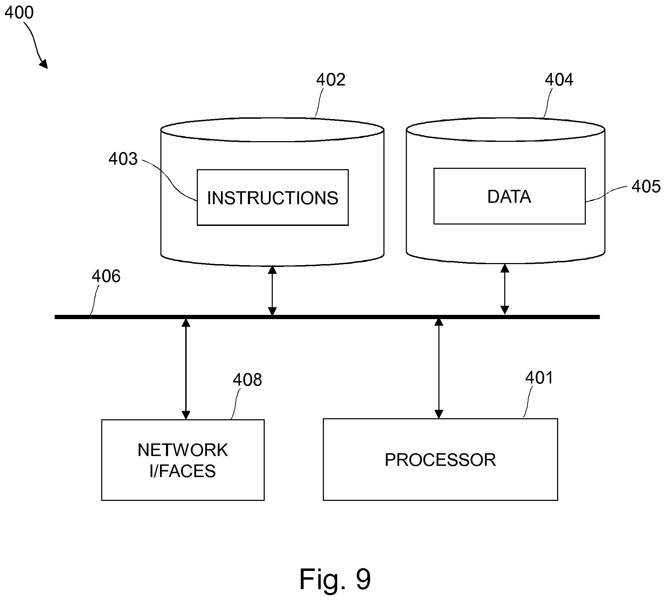

Figure 9 shows an example of processing apparatus 400 which may be implemented as any form of a computing and/or electronic device, and in which embodiments of the system and methods described above may be implemented. Processing apparatus may implement all, or part of, the method shown in Figure 8, or described or shown in earlier Figures or examples. Processing apparatus 400 comprises one or more processors 401 which may be microprocessors, controllers or any other suitable type of processors for executing instructions to control the operation of the device. The processor 401 is connected to other components of the device via one or more buses 406. Processor-executable instructions 403 may be provided using any computer-readable media, such as memory 402. The processor-executable instructions 303 can comprise instructions for implementing the functionality of the described methods. The memory 402 is of any suitable type such as read-only memory (ROM), random access memory (RAM), a storage device of any type such as a magnetic or optical storage device. Additional memory 404 can be provided to store data 405 used by the processor 401. The processing apparatus 400 comprises one or more network interfaces 408 for interfacing with other network entities. The radio network controller 90, mobility predictor 80 and/or transport system unit 70 may separately or together be implemented using an apparatus corresponding to processing apparatus 400.

In the above description, a rail network has been used as an example of a transport system 30. The transport system may comprise other forms of rail based transport, such as underground railways, subways, or trams. The transport system may comprise water-based transport, such as boats or ferries. The transport system may comprise road-based transport, such as buses or coaches. The transport network may comprise air-based transport, such as aircraft. In each case, a unit 70 (e.g. controller or monitoring unit) of the transport system may obtain data to allow a determination of when the vehicle is within a threshold time of entering a next service area. For example, the data provided by the transport system unit 70 may be the position (and optionally, speed) of the vehicles in the transport system, e.g. using a positioning system, such as the Global Positioning System (GPS) or a dedicated position tracking system.

The transport system may comprise a vehicle operator which operates a plurality of vehicles, such as a fleet of buses, coaches, boats or ferries. The network of roads or waterways which are used by the vehicles may be under the control of a different entity to the vehicle operator. The mobility predictor 80, or the radio network controller 90, may communicate with the operator of the transport system to obtain information about vehicles in the transport system. Multiple operators may share the same network of tracks, roads or waterways. In some examples, the transport system unit 70 is remote from the mobility predictor 80 and/or radio network controller 90. For example, the transport system unit 70 is operated by a transport system operator or other operator relating primarily to the transport system. The mobility predictor 80 and radio network controller 90 operated by an entity related to the radio network, e.g. a radio network operator or provider.

The steps of the methods described herein may be carried out in any suitable order, or simultaneously where appropriate. An advantage of at least one example is optimization of the usage of resources, such as computational or processing resources, in the radio network.

An advantage of at least one example is an enhanced service quality, as each crossed fronthaul area is able to provide the radio resources needed by the passengers of the train. If it is not possible to provide suitable resources, the method provides additional time to organize possible countermeasures such as prioritizing some services for users on the incoming train.

An advantage of at least one example is an improved quality of service to other users of the radio network, since additional resources may be provided as the train passes through their radio service area. An advantage of at least one example is that unused resources can be allocated to different areas with benefits also in term of overall cost, and power consumption, as the radio resources and baseband processing are provided only where needed.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the generalpurpose processor to perform the required tasks, or the processing apparatus can be dedicated to perform the required functions. Another aspect of the invention provides machine-readable instructions (software) which, when executed by a processor, perform any of the described methods. The machine-readable instructions may be stored on an electronic memory device, hard disk, optical disk or other machinereadable storage medium. The machine-readable medium can be a non-transitory machine-readable medium. The term "non-transitory machine-readable medium" comprises all machine-readable media except for a transitory, propagating signal. The machine-readable instructions can be downloaded to the storage medium via a network connection.

## Claims

1. A method of controlling operation of a radio network (10), the radio network comprising a plurality of service areas (11, 12), the method comprising:
receiving a first input (81) relating to a transport system (30), the transport system (30) providing for at least one vehicle (40), wherein the first input is indicative of a position of the vehicle in the transport system;
determining, on the basis of the first input (81) and data which is indicative of the plurality of service areas (11,12), which of the service areas (11,12) will next serve one or more radio terminals associated with the vehicle (40); and
outputting a control signal (83) for use in controlling operation of the radio network based on the determination of which of the service areas will next serve the one or more radio terminals associated with the vehicle;
wherein the service area (11,12) comprises a plurality of cells, and the radio network comprises one or more baseband processing units which are shared by a plurality of the cells of the service area,
wherein the control signal (83) is for use in pre-configuring the one or more baseband processing units (112) associated with the service area determined to next serve the one or more radio terminals associated with the vehicle (40).

2. A method according to claim 1 wherein the control signal is for use in pre-configuring resources of the radio network associated with the service area (11,12) determined to be next to serve the one or more radio terminals associated with the vehicle.

3. A method according to claim 1 wherein the plurality of cells are provided by a plurality of Remote Radio Units, and the one or more baseband processing units (112) are in a pool (113A) common to the plurality of Remote Radio Units.

4. A method according to any one of the preceding claims comprising pre-configuring a small cell layer associated with a macro cell layer.

5. A method according to any one of the preceding claims comprising outputting the control signal (83) in advance of the one or more radio terminals associated with the vehicle being served by the next service area.

6. Apparatus (80; 90) for controlling operation of a radio network, the radio network comprising a plurality of service areas (11, 12), the apparatus comprising:
an input (86;96) configured to receive a first input relating to a transport system (30), the transport system providing for at least one vehicle (40), wherein the first input is indicative of a position of the vehicle in the transport system (30);
a computation module (84;94) configured to determine, on the basis of the first input and data which is indicative of the plurality of service areas, which of the service areas will next serve one or more radio terminals associated with the vehicle; and
an output (87) configured to output a control signal arranged to control operation of the radio network based on the determination of which of the service areas will next serve the one or more radio terminals associated with the vehicle;
wherein the service area comprises a plurality of cells, and the radio network comprises one or more baseband processing units (112) which are shared by a plurality of the cells of the service area.
wherein the control signal (83) is arranged to pre-configure the one or more baseband processing units associated with the service area determined to next serve the one or more radio terminals associated with the vehicle.

7. Apparatus according to claim 6, configured to use the control signal to pre-configure resources of the radio network, associated with the service area (11,12), determined to be next to serve the one or more radio terminals associated with the vehicle.

8. A computer program product comprising a machine-readable medium carrying instructions which, when executed by a processor, associated with an apparatus (80; 90) for controlling operation of a radio network (10), cause the apparatus (80; 90) for controlling operation of a radio network (10) to perform the steps of the method of any one of claims 1 to 5.

## Patentansprüche

1. Verfahren zum Steuern des Betriebs eines Funknetzwerks (10), wobei das Funknetzwerk eine Vielzahl von Dienstbereichen (11, 12) umfasst, das Verfahren umfassend:
Empfangen einer ersten Eingabe (81) in Bezug auf ein Transportsystem (30), wobei das Transportsystem (30) mindestens ein Fahrzeug (40) bereitstellt, wobei die erste Eingabe ein Hinweis auf die Position des Fahrzeugs in dem Transportsystem ist;
Bestimmen, auf der Grundlage der ersten Eingabe (81) und von Daten, die für die Vielzahl von Dienstbereichen (11, 12) kennzeichnend sind, welcher der Dienstbereiche (11, 12) als nächstes ein oder mehrere dem Fahrzeug (40) zugeordnete Funkendgeräte bedienen wird; und
Ausgeben eines Steuersignals (83), das zum Steuern des Betriebs des Funknetzwerks basierend auf der Bestimmung verwendet wird, welcher der Dienstbereiche als nächstes das eine oder die mehreren dem Fahrzeug zugeordneten Funkendgeräte bedienen wird;
wobei der Dienstbereich (11, 12) eine Vielzahl von Zellen umfasst und das Funknetzwerk eine oder mehrere Basisbandverarbeitungseinheiten umfasst, die von einer Vielzahl der Zellen des Dienstbereichs gemeinsam genutzt werden,
wobei das Steuersignal (83) zum Vorkonfigurieren der einen oder mehreren Basisbandverarbeitungseinheiten (112) verwendet wird, die dem Dienstbereich zugeordnet sind, der bestimmt wurde, als nächstes das eine oder die mehreren Funkendgeräte zu bedienen, die dem Fahrzeug (40) zugeordnet sind.

2. Verfahren nach Anspruch 1, wobei das Steuersignal zum Vorkonfigurieren von Ressourcen des Funknetzwerks verwendet wird, das dem Dienstbereich (11, 12) zugeordnet ist, der bestimmt wurde, als nächstes das eine oder die mehreren dem Fahrzeug zugeordneten Funkendgeräte zu bedienen.

3. Verfahren nach Anspruch 1, wobei die Vielzahl von Zellen durch eine Vielzahl von entfernten Funkeinheiten bereitgestellt wird und die eine oder die mehreren Basisbandverarbeitungseinheiten (112) in einem Pool (113A) sind, der der Vielzahl von entfernten Funkeinheiten gemeinsam ist.

4. Verfahren nach einem der vorstehenden Ansprüche, umfassend das Vorkonfigurieren einer kleinen Zellschicht, die einer Makrozellschicht zugeordnet ist.

5. Verfahren nach einem der vorstehenden Ansprüche, das das Ausgeben des Steuersignals (83) vor dem einen oder den mehreren Funkendgeräten umfasst, die dem Fahrzeug zugeordnet sind, das von dem nächsten Dienstbereich bedient wird.

6. Vorrichtung (80; 90) zum Steuern des Betriebs eines Funknetzwerks, wobei das Funknetzwerk eine Vielzahl von Dienstbereichen (11, 12) umfasst, die Vorrichtung umfassend:
eine Eingabe (86; 96), die zum Empfangen einer ersten Eingabe in Bezug auf ein Transportsystem (30) konfiguriert ist, wobei das Transportsystem mindestens ein Fahrzeug (40) bereitstellt, wobei die erste Eingabe ein Hinweis auf die Position des Fahrzeugs in dem Transportsystem (30) ist;
ein Berechnungsmodul (84; 94), das zum Bestimmen, auf der Grundlage der ersten Eingabe und von Daten, die für die Vielzahl von Dienstbereichen kennzeichnend sind, welcher der Dienstbereiche als nächstes ein oder mehrere dem Fahrzeug zugeordnete Funkendgeräte bedienen wird, konfiguriert ist; und
eine Ausgabe (87), die zum Ausgeben eines Steuersignals konfiguriert ist, das so angeordnet ist, dass es den Betrieb des Funknetzwerks auf der Grundlage der Bestimmung steuert, welcher der Dienstbereiche als nächstes das eine oder die mehreren dem Fahrzeug zugeordneten Funkendgeräte bedienen wird;
wobei der Dienstbereich eine Vielzahl von Zellen umfasst und das Funknetzwerk eine oder mehrere Basisbandverarbeitungseinheiten (112) umfasst, die von einer Vielzahl der Zellen des Dienstbereichs gemeinsam genutzt werden;
wobei das Steuersignal (83) so angeordnet ist, um die eine oder mehrere Basisbandverarbeitungseinheiten zu konfigurieren, die dem Dienstbereich zugeordnet sind, der als nächstes das eine oder die mehreren Funkendgeräte bedienen wird, die dem Fahrzeug zugeordnet sind.

7. Vorrichtung nach Anspruch 6, die konfiguriert ist, das Steuersignal zum Vorkonfigurieren von Ressourcen des Funknetzwerks zu verwenden, das dem Dienstbereich (11, 12) zugeordnet ist, der bestimmt wurde, als nächstes das eine oder die mehreren dem Fahrzeug zugeordneten Funkendgeräte zu bedienen.

8. Computerprogrammprodukt, das ein maschinenlesbares Medium umfasst, das Anweisungen trägt, die, wenn sie von einem Prozessor in Verbindung mit einer Vorrichtung (80; 90) zum Steuern des Betriebs eines Funknetzwerks (10) ausgeführt werden, bewirken, dass die Vorrichtung (80; 90) zum Steuern des Betriebs eines Funknetzwerks (10) die Schritte des Verfahrens nach einem der Ansprüche 1 bis 5 ausführt.

## Revendications

1. Procédé de commande de fonctionnement d'un réseau radio (10), le réseau radio comprenant une pluralité de zones de service (11, 12), le procédé comprenant :
la réception d'une première entrée (81) se rapportant à un système de transport (30), le système de transport (30) prévoyant au moins un véhicule (40), dans lequel la première entrée est indicative d'une position du véhicule dans le système de transport ;
la détermination, sur la base de la première entrée (81) et de données qui sont indicatives de la pluralité de zones de service (11, 12), de celle des zones de service (11, 12) qui desservira ensuite un ou plusieurs terminaux radio associés au véhicule (40) ; et
la sortie d'un signal de commande (83) destiné à être utilisé pour une opération de commande du réseau radio sur la base de la détermination de celle des zones de service qui desservira ensuite le ou les terminaux radio associés au véhicule ;
dans lequel la zone de service (11, 12) comprend une pluralité de cellules, et le réseau radio comprend une ou plusieurs unités de traitement de bande de base qui sont partagées par une pluralité des cellules de la zone de service,
dans lequel le signal de commande (83) est destiné à être utilisé pour la pré-configuration de la ou des unités de traitement de bande de base (112) associées à la zone de service déterminée pour desservir ensuite le ou les terminaux radio associés au véhicule (40).

2. Procédé selon la revendication 1 dans lequel le signal de commande est destiné à être utilisé pour la pré-configuration de ressources du réseau radio associé à la zone de service (11, 12) déterminée comme étant la suivante à desservir le ou les terminaux radio associés au véhicule.

3. Procédé selon la revendication 1 dans lequel la pluralité de cellules sont fournies par une pluralité d'unités radio distantes, et la ou les unités de traitement de bande de base (112) sont dans un ensemble (113A) commun à la pluralité d'unités radio distantes.

4. Procédé selon l'une quelconque des revendications précédentes comprenant la pré-configuration une couche de petites cellules associée à une couche de macro-cellules.

5. Procédé selon l'une quelconque des revendications précédentes comprenant la sortie du signal de commande (83) en avance sur le ou les terminaux radio associés au véhicule desservi par la zone de service suivante.

6. Appareil (80 ; 90) pour commander le fonctionnement d'un réseau radio, le réseau radio comprenant une pluralité de zones de service (11, 12), l'appareil comprenant :
une entrée (86 ; 96) configurée pour recevoir une première entrée se rapportant à un système de transport (30), le système de transport prévoyant au moins un véhicule (40), dans lequel la première entrée est indicative d'une position du véhicule dans le système de transport (30) ;
un module de calcul (84 ; 94) configuré pour déterminer, sur la base de la première entrée et de données qui sont indicatives de la pluralité de zones de service, celle des zones de service qui desservira ensuite un ou plusieurs terminaux radio associés au véhicule ; et
une sortie (87) configurée pour délivrer en sortie un signal de commande agencé pour commander le fonctionnement du réseau radio sur la base de la détermination de celle des zones de service qui desservira ensuite le ou les terminaux radio associés au véhicule ;
dans lequel la zone de service comprend une pluralité de cellules, et le réseau radio comprend une ou plusieurs unités de traitement de bande de base (112) qui sont partagées par une pluralité des cellules de la zone de service.
dans lequel le signal de commande (83) est agencé pour pré-configurer la ou des unités de traitement de bande de base associées à la zone de service déterminée pour desservir ensuite le ou les terminaux radio associés au véhicule.

7. Appareil selon la revendication 6, configuré pour utiliser le signal de commande pour pré-configurer des ressources du réseau radio, associé à la zone de service (11, 12), déterminée comme étant la suivante à desservir le ou les terminaux radio associés au véhicule.

8. Produit programme informatique comprenant un support lisible par machine comportant des instructions qui, lorsqu'elles sont exécutées par un processeur, associé à un appareil (80 ; 90) pour commander le fonctionnement d'un réseau radio (10), amènent l'appareil (80 ; 90) pour commander le fonctionnement d'un réseau radio (10) à mettre en œuvre les étapes du procédé selon l'une quelconque des revendications 1 à 5.
